# EUROPEAN PATENT APPLICATION

(11) **EP 2 444 922 A1**
(43) Date of publication of application: **25.04.2012**
(21) Application number: 10012551.7
(22) Date of filing: 30.09.2010
(51) Int. Cl.: G06Q 10/00

(54) **Method for storing information for identification of apparatuses, device and the like being subject to maintenance and/or repair**

(71) Applicant: ABB AG, 68309 Mannheim (DE)
(72) Inventor: Gitzel, Ralf, Dr., 68165 Mannheim (DE); Schuh, Lothar, Dr. rer. nat., 68723 Plankstadt (DE)

(57) **Abstract**

The invention relates to a method and system for storing information for identification of goods, e.g. apparatuses, devices and the like, being subject to maintenance and/or repair work whereas the identification is done by visualization of the respective goods i.e. apparatus or device whereas at least one image of the respective apparatus or device is produced and stored in a database being provided for supply of any information as to the objects to be maintained and/or repaired.

## Description

The invention relates to a method and system for storing information for identification of apparatuses, devices and the like being subject to maintenance and/or repair work.

As a matter of fact any technology bears the risk to fail. A good documentation of failure causes and repair procedures may support persons charged to fix the respective problem when it occurs again. Advantageously a library or as customary today a database should be available where information is stored and searches are possible.

Currently, maintenance is done by specific units in companies where besides other information especially information about failures is collected and sometimes preprocessed in a Computerized Maintenance Management System (CMMS). Often this information contains a problem description and its solution which is provided by the respective person who is mostly a technician who has to write the respective memo.

And here starts the problem as follows. Entries e.g. descriptions to collections such as a Computerized Maintenance Management System are often hastily entered due to lack of time. Accordingly mistakes can happen. A further barrier can be generated by the language when e.g. the maintenance is performed by people of different countries not speaking the same language.

Hence the problem with false use of technical terms and non-standardized descriptions arises. This problem gets even worse, if a global organization is considered, where different languages and different technical terms are used for the same object.

Accordingly missing or incomplete entries as well as spelling errors and/or terminological mistakes tighten the problem and make it difficult or even impossible for anyone to search the database in order to share experience being stored therein in order to run statistical analysis and benchmarking extract key performance indicators.

Based on these facts it is an object of the invention to provide a method and a system allowing an improved usability of such library or database as described before where information for identification of goods, e.g. apparatuses, devices and the like, being subject to maintenance and/or repair work are being stored.

In particular it is desired to improve the availability of the stored information for any person independent from his or her family background as well as to his or her language skills and his or her degree of education.

Consequently this object is solved according to a preferred embodiment by means of visualization of the respective goods e.g. apparatuses and/or devices, i.e. the identification is done by visualization of the respective goods whereas at least one image, drawing or 3D model of the respective apparatus or device is produced and stored in a library or database being provided for supply of any information as to the objects to be maintained and/or repaired. In the following the terms library and vice versa database are used for tools of similar type and stand as well for a hardware as for a software.

According to an advantageous embodiment of the invention to each visualized kind of goods (i.e. apparatuses or devices) which usually may be a photograph, series of photographs preferably taken from different views, corresponding pictograms or 3D models being stored in said database at least one customary technical term is allocated.

A further embodiment of the invention being achieved by an improvement of the claimed method according to the aforementioned features provides for said database its use for identification of any apparatus or device by means of recognizing the subject behind the image or behind the allocated technical term.

When any person is charged with the task of maintenance or repair of any object this person may identify the respective object either visually by recognizing its image or by reading the specific term or in combination of both.

According to another embodiment of the invention a further improvement of the claimed method is characterized in that the apparatuses and devices being stored in the database are categorized according to the purpose of the apparatuses and devices.

A further embodiment of the claimed method is characterized in that to each category of the apparatuses and devices a specific icon is being allocated in order to easily identify the group of similar objects.

Preferably any object being shown on a map is provided with an icon whereas each icon which stands for an object respectively a specific task to be done with this object which additionally is provided with a keyword or code which allows easy identification of the respective object by means of decoding.

According to another advantageous embodiment of the claimed method the invention is characterized in that a visual description of failures based on symbol libraries is automatically translated into a standardized description text which additionally may be generated in a standardized form thus the person dealing with this matter, e.g. a technician, can easily find the respective information in a certain field or area of the form, whereas additionally a visual classification may be provided which defines the symptoms and the possible causes for the technician thus he is enabled to act accordingly.

Furthermore another embodiment is characterized in that the apparatuses and devices being stored in the database are positioned on a map whereas they are indicated by icons related to their different objectives.

Accordingly each icon stands for an object whereas additionally it can be provided with a keyword or code which allows easy identification of the respective object by means of decoding.

As stated in the initial part already the invention relates to a system, too, which is provided for storing information for identification of apparatuses, devices and the like being subject to maintenance and/or repair work whereas the system shall provide for better usability of the stored data be it a library or a database where the data are stored.

Accordingly said library or database is being established in order to collect, store, and provide the data of visualized apparatuses and/or devices for identification purposes.

An advantageous improvement of the claimed system provides as well images as customary technical terms of the related goods in at least one language are stored in said database.

Another embodiment of the invention may be characterized by a visual classification system which defines the symptoms and the possible causes for the technician.

As a further advantage an embodiment of the system provides for said database a concordance system which allows the comparison of an image and the respective technical term being assigned to this image and reverse. This facilitates the use of the stored data and makes it possible to such people who are not familiar with the language or if applicable with the technical features.

As a specific improvement of the invention said database is being used for identification of any apparatus or device by means of recognition of the subject behind the image respectively behind the assigned technical term.

According to another preferred embodiment the data being stored in the database are being split into different categories where similar apparatuses and devices are merged according to the purpose of the apparatuses and devices.

Consequently to each category of the apparatuses and devices a specific superior icon is being allocated in order to easily identify the group of similar objects.

For easy approach a map of the installation or of the apparatus etc. is being provided where any object is being shown by means of an icon.

A further embodiment which is advantageous for the claimed System a register of information and instruction as to failure causes and repair procedures is provided in the database. Said register may be arranged to be used as well in alphabetical order of the technical terms or by means of the icons respectively categories.

Summarizing one can state that this invention proposes a visual front end to CMMS and similar data bases in order to provide structure to the entries. The visual interface makes it easier to enter data without detailed terminological knowledge.

The resulting data base entries are standardized automatically by the invention and it is easy to analyze data even with simple statistical tools for problem analysis over a population of equipment.

A service engineer has to report about the cause of a failure, the symptoms and the solving of the problem and to record the report in said database. Here the key features are:
- Start of the Computerized Maintenance Management System (CMMS) as a reporting tool for the technician who wishes to solve a problem, e.g. by replacement of a defect part;
- Selection of the respective device/equipment (which the technician has to repair) from a library;
- Display of the device or part of a machine, that has to be treated, i.e. repaired, maintained, by a technician as a graphical image on a screen;
- Display of an image being rotatable as a 3-dim representation of the device or part of the machine;
- Display of further information for the respective image on the screen received from a database being connected to the display which database contains a plurality of documents e.g. part lists, technical specifications, maintenance schedules, and a list of any failures which can occur e.g. noise, leakage, early wear;
- Consultation of a database containing a list of "symptom-icons"/pictograms representing possible failures;
- Display of the location of the equipment, where the symptom occurred by choosing of a keyword e.g. "noise" whereupon the location is dragged and dropped on the screen;
- Selection of the current problem from the same or an associated database where cases according to the respective "symptom-icons"/pictograms are recorded in the past have been stored and linked to a short description;
- Generation of the literal description in the Computerized Maintenance Management A (CMMA) database automatically;
- Initiation of a database-query: Which failures are probable for the specific device/equipment?
- Retrieval of a table of "failure-icons" from said database and its display on the screen;
- Draw of the right failure icon to the location of the failure in the image of the respective equipment/device;
- Start of a query and generation of the description of the failure in the Computerized Maintenance Management System (CMMS);
- Identification of the actual failure by means of a comparison with a definite pattern of possible failures, e.g. if "noise" is the symptom of the failure: a sound file is played to confirm, that a certain noise is actually the symptom;
- Confirmation by the technician and storing the information in the CMMS;
- Query for which retrieval of "repair-icons" to be displayed sent by the technician to the database;
- Draw of the correct repair icon to the place, where the equipment/device has been repaired;
- Retrieval of a description and image of possible spare parts from said database and selection of the right one by drawing it from the icon-table;
- Display of the respective description being behind the respective repair icon, which likewise is stored in the database.

Furthermore the invention is dedicated to provide a method whereas icons are generated automatically representing actions like "remove the cap from the front", "then remove the fuse" etc. or "Fix it fast!". Accordingly based on the information behind the icons which visualize a problem a description of the problem is generated automatically.

Likewise the information behind an icon automatically can be translated into the desired language which the respective person does understand and needs to give a report.

According to a further embodiment of the invention the sequence of actions, given by a sequence of icons to do a repair, is documented in the database.

Another embodiment of the claimed method relates to dragging a failure symptom icon over the device icon which results in an automatic search in the database to identify what has to be done to overcome this failure i.e. a repair advice.

Finally one embodiment of the system according to the invention generates a sequence of icons to advise the person what to do in order to substitute any textual information by images thus reading is no longer necessary for repair of a device.

These and further advantageous embodiments and improvements of the invention are subject matter of the dependent claims.

By means of examples of various preferred embodiments of the invention which are shown in the attached drawing the invention, advantageous embodiments and improvements of the invention as well as special advantages of the invention shall be illustrated and described in more detail.

In this regard it is indicated that the comprehensiveness of the invention is not limited to the embodiments and configurations shown and illustrated in the figures but extended to other embodiments and configurations within the scope of the claims.

It is shown in
- Fig. 1: a scheme of the flow structure of the subject matter of the invention;
- Fig. 2: a display of a cross-sectional view of a machine within a plant or an apparatus accompanied by a collection of icons to be dragged to the view and dropped there if applicable;
- Fig. 3: the display of Fig. 2 whereas an applicable icon from said collection has been dragged and dropped there whereas an optional box with comments has been inserted;
- Fig. 4: the display of Fig. 2 whereas some optional boxes have been inserted comprising information generated from past experiences and
- Fig. 5: the display of Fig. 2 whereas an optional box with comments has been inserted being useful for future diagnosis and reliability analyses.

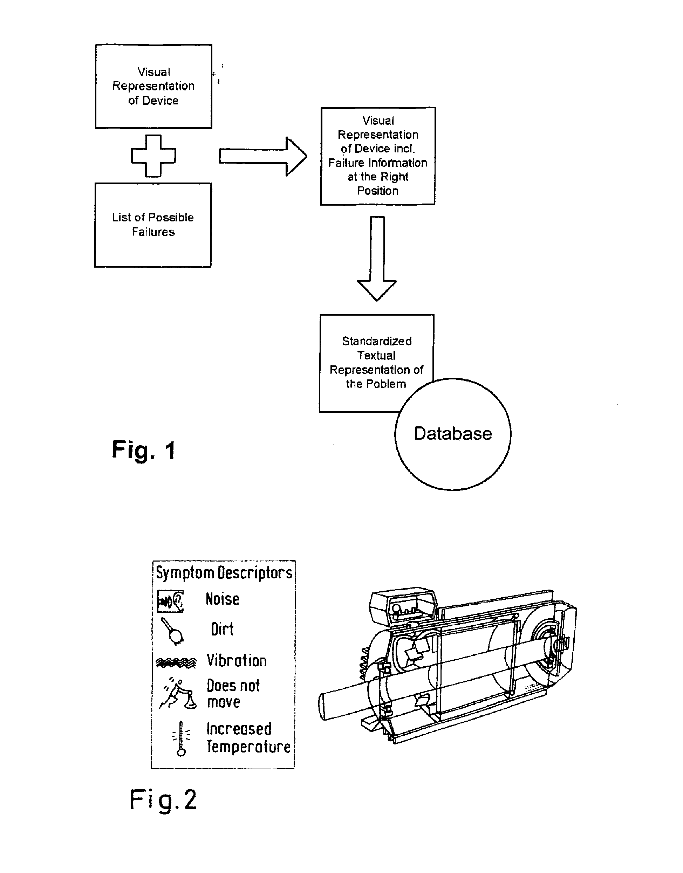

In Fig. 1 a scheme of the flow structure of the subject matter of the invention is shown whereas the method according to the invention starts with a simultaneous comparison of the entries in a list of possible failures as well as with respective images as a visual representation of the respective device or component.

This requires a certain knowledge of the charged person with the respective plant in order to be able either to recognize the respective component (device or part of the device or the apparatus or part of the apparatus) by means of the correct term or by the image and to allocate the probable failure to be mended.

When the failure and the affected plant component have been identified correctly then the combination of the component and the failure information is displayed as a visual representation of the component including all information about possible failures as well as of the precise location of the affected component in the plant area.

Upon this a standardized textual representation of the problem respectively of the assumed problem is displayed whereas all data for these actions as well as for the aforementioned actions are taken from a database where such data have been recorded earlier in case of fail operation and stored for later use.

The visual front end of the CMMS shows a graphic or icon of equipment, maybe on a map of the plant. The operator or any other person who has discovered the failure and repaired it can drag a "symptom-icon" on the screen or table in order to illustrate the problem. For example, the dirt icon can be dragged towards a cooling grill or a vibration icon towards a spinning shaft.

The practicability of this invention as being described before is shown in the Figs. 2 to 5 by means of an example for the factual demand, i.e. it represents the claimed invention being applied to a machine, a part of a machine or a spare part which may have different denominations depending on the language and the technical background of a person.

In an environment typical for the example given, reports about occurring symptoms, the cause of a failure and the solving of the problem have to be written down and recorded in a database whereas the key features are:
- the person observing the symptoms (e.g. strange noises, smoke, decreased performance) can visually search for the device in the Computerized Maintenance Management System (CMMS)
- the image is connected to a database that contains a plurality of documents e.g. part lists, technical specifications, maintenance schedules, a list of the failures which can occur e.g. noise, leakage, early wear;
- a database containing a list of "symptom-icons"/pictograms, which represent the failures will be consulted;

Consequently Fig. 2 shows an image of the cross-section of a machine, e.g. an electric generator or motor, in a perspective view and aside of the image a box is located which contains some icons for typical failures being used as symptom descriptors.

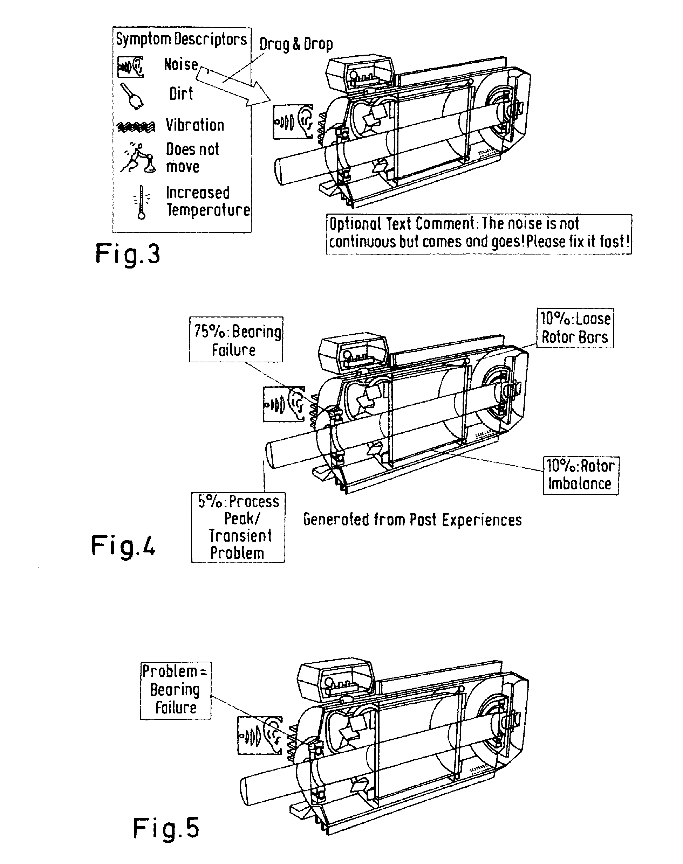

In Fig. 3 the same image and box are shown as in Fig. 2 but due to an identified failure the icon for noise has been dragged (arrow "Drag & Drop") and dropped to the image where it is preferably positioned at that position where the symptom "noise" has occurred respectively has been detected whereas such icon can be connected to a storage of standardized text information being prepared for some typical cases.

Hence, where applicable the respective icon used for a defined symptom can be illustrated by optionally adding a text box which comprises a standard text according to the respective occurrence whereas the information about the occurrence has been take from said storage e.g. the optional text comment: "The noise is not continuous but comes and goes. Please fix it fast!"

Consequently the task is assigned to a technician who will call up the picture with the problem description as shown in Fig. 3.

Generally the symptom description is based on the input given in the previous steps. The picture may be augmented with information on previous reasons for this kind of problem. According to Fig. 4 statistical indications for typical failures may be added to the image thus the technician is supported with the detection of the specific failure. Searching in a database for such item only by means of the respective term is a challenge.

On the other hand all people will recognize a part or device when it is displayed as an image, even if the correct name is not known. The same is valid for actions done for repair of a machine or of a device.

According to the invention, after solving the problem the technician will start the Computerized Maintenance Management System (CMMS) as a reporting tool. After selection of the device/equipment to be repaired from a library, the device or part of a machine, that has been treated, i.e. repaired, maintained, by a technician is displayed as a graphical image on a screen whereas the image is a 3-dim representation of the device or part of the machine and can be rotated.

The list may also be extended with new entries to cover newly discovered problems whereas the literal description is generated automatically in the Computerized Maintenance Management System (CMMS) database. Furthermore the graphic can be augmented with sound files and other recorded information. Likewise a description and image of possible spare parts, which can be used, can be retrieved from the database and the right one can be selected by drawing it from the icon-table to the respective position.

Finally as shown in Fig. 5 the cause for the current problem is selected from a list of possible causes and inserted in to the image in order to provide the information for any occurrences in the future thus then the respective information is available for the technician who is charged with the solution of a new occurrence.

## Claims

1. Method for storing information for identification of goods, e.g. apparatuses, devices and the like, being subject to maintenance and/or repair work
**characterized in that**
the identification is done by visualization of the respective goods i.e. apparatus or device whereas at least one image of the respective apparatus or device is produced and stored in a database being provided for supply of any information as to the objects to be maintained and/or repaired.

2. Method according to claim 1 whereas to each visualized apparatus or device being stored in said database at least one customary technical term is allocated.

3. Method according to claim 1 or 2 where said database is being used for identification of any apparatus or device by means of recognizing the subject behind the image or behind the allocated technical term.

4. Method according to at least one of the preceding claims whereas the apparatuses and devices being stored in the database are categorized according to the purpose of the apparatuses and devices.

5. Method according to claim 4 where to each category of the apparatuses and devices a specific icon is being allocated in order to easily identify the group of similar objects.

6. Method according to claim 4 or 5 whereas any object being shown on a map is provided with an icon.

7. Method according to claim 6 where as each icon which stands for an object additionally is being provided with a keyword or code which allows easy identification of the respective object by means of decoding.

8. Method according to at least one of the preceding claims **characterized in that** a visual description of failures based on symbol libraries is automatically translated into a standardized description text.

9. Method according to at least one of the preceding claims **characterized in that** a visual classification is being provided which defines the symptoms and the possible causes for the technician.

10. System for storing information for identification of apparatuses, devices and the like being subject to maintenance and/or repair work according to at least one of the preceding claims comprising a database where data of visualized apparatuses and/or devices are being stored for identification purposes.

11. System according to claim 10 where as well images as customary technical terms of the related goods in at least one language are stored in said database.

12. System according to claim 10 or 11 whereas said database comprises a concordance system which allows the comparison of an image and the respective technical term being assigned to this image and reverse.

13. System according to at least one of the preceding claims 10 to 12 said database is being used for identification of any apparatus or device by means of recognition of the subject behind the image respectively behind the assigned technical term.

14. System according to at least one of the preceding claims 10 to 13 whereas the database comprises categories of similar apparatuses and devices according to the purpose of the apparatuses and devices.

15. System according to claim 14 whereas to each category of the apparatuses and devices a specific icon is being allocated in order to easily identify the group of similar objects.

16. System according to at least one of the preceding claims 10 to 15 **characterized in that** it generates icons automatically representing specific commands for actions to be done.

17. System according to at least one of the preceding claims 10 to 16 **characterized in that** it generates a sequence of icons to advise the person what to do thus no reading is necessary to repair a device

18. Method according to at least one of the preceding claims 1 to 9 **characterized in that** a problem description is generated automatically based on the information behind the icons.

19. Method according to at least one of the preceding claims 1 to 9 and 18 **characterized in that** the information behind an icon is automatically translated into the desired language which is understood by the respective person to give a report.

20. Method according to at least one of the preceding claims 1 to 9 and 18 or 19 **characterized in that** the sequence of actions, given by a sequence of icons to do a repair, is documented in the database.

21. Method according to at least one of the preceding claims 1 to 9 and 18 to 20 **characterized in that** by dragging of a failure symptom icon over the device icon an automatic search in the database is initiated to identify what has to be done to overcome this failure.
